# EUROPÄISCHE PATENTSCHRIFT

(11) **EP 1 056 626 B1**
(45) Veröffentlichungstag und Bekanntmachung des Hinweises auf die Patenterteilung: **10.11.2004**
(21) Anmeldenummer: 99945935.7
(22) Anmeldetag: 07.07.1999
(51) Int. Cl.: B60S 1/08

(54) **WISCHVORRICHTUNG, INSBESONDERE FÜR EINE KRAFTFAHRZEUGSCHEIBE**
WIPER DEVICE, NOTABLY FOR A MOTOR VEHICLE WINDOW
DISPOSITIF D'ESSUYAGE, NOTAMMENT POUR UN PARE-BRISE D'AUTOMOBILE

(30) Priorität: 29.12.1998 DE 19860673
(43) Veröffentlichungstag der Anmeldung: 06.12.2000
(73) Patentinhaber: ROBERT BOSCH GMBH, 70442 Stuttgart (DE)
(72) Erfinder: HOG, Norbert, D-77815 Buehl (DE); MICHENFELDER, Gebhard, D-77839 Lichtenau (DE); MEIER, Hans, D-77833 Ottersweier (DE)
(86) Internationale Anmeldenummer: PCT/DE1999/002098
(87) Internationale Veröffentlichungsnummer: WO 2000/038960

(56) Entgegenhaltungen:
- DE-A- 19 639 137
- DE-A- 19 756 429
- PATENT ABSTRACTS OF JAPAN vol. 009, no. 025 (M-355), 2. Februar 1985 (1985-02-02) & JP 59 171739 A (NISSAN JIDOSHA KK), 28. September 1984 (1984-09-28)

## Beschreibung

### Stand der Technik

Die Erfindung geht aus von einer Wischvorrichtung für Kraftfahrzeugscheiben nach Gattung des Oberbegriffs des Hauptanspruchs. Es ist für eine Scheibenwisch- und waschanlage in Kraftfahrzeugen schon eine Schaltungsanordnung mit einer Eindraht-Verbindungsleitung zwischen einem Steuergerät und einem Bedienelement in Form eines Stufenschalters aus OS-DE 42 21 972 bekannt, jedoch werden hier mehrere Schaltstellungen mit einem Spannungsteiler analog codiert der Auswerteeinrichtung zugeführt. Ein gravierender Nachteil dieser Anordnung ist jedoch eine große Störanfälligkeit bei der Auswertung der Schalterstellungen durch verschiedene Umwelteinflüsse wie Korrosion und Verschmutzung, aber auch durch Spannungsschwankungen im Bordnetz.

Mit der Erfindung wird angestrebt eine Schaltungsanordnung der Eingangs genannten Art dahingehend zu verbessern, daß eine einfachere und gegen Störungen besser gesicherte Steuerung über ein möglichst einfach ausgebildetes Bedienelement erfolgen kann und die Verkabelung im Fahrzeug trotzdem einfach bleibt.

Aus der JP-A-59 171 739 ist eine Wischvorrichtung nach dem Oberbegriff des unabhängigen Anspruchs bekannt.

### Vorteile der Erfindung

Mit der vorliegenden Lösung wird eine Wischvorrichtung mit einer Schaltungsanordnung für Scheibenwischer bestehend aus einem vorzugsweise als Lenkstockschalter ausgebildetem Bedienelement, einer Auswerteeinrichtung und einem Regensensor gezeigt, welche für den Fahrzeuglenker eine extrem einfache Bedienung durch die Verwendung eines Tastschalters zuläßt und gleichzeitig die Verkabelung im Fahrzeug auf einem minimalen Stand hält. Die Schaltfunktion von Tastschaltern ist sehr zuverlässig, da sie sehr einfach im Aufbau und in der Herstellung sind und eine hohe Lebensdauer aufgrund der wenigen Teile und ihrer einfachen Mechanik aufweisen.

Durch die in den Unteransprüchen aufgeführten Maßnahmen ergeben sich vorteilhafte Weiterbildungen und Verbesserungen der im Hauptanspruch genannten Merkmale.

Dadurch, daß durch diesen Tastschalter ein automatischer, vom Regensensor gesteuerter Betrieb der Wischvorrichtung in Gang gesetzt wird, wird der Fahrzeuglenker entlastet, da die Wischvorgänge von der Auswerteeinrichtung in Abhängigkeit von der Benetzung der Scheibe ausgelöst werden.

Durch eine geeignete Schaltung gemäß den Unteransprüchen läßt sich eine LED am Bedienelement selbst anbringen ohne, daß eine weitere Leitung zwischen Auswerteeinrichtung und Bedienelement vorhanden sein muß. So kann der Fahrzeuglenker den Betriebszustand der Wischvorrichtung jederzeit selbst überwachen.

Durch die getaktete Ansteuerung eines Schaltelementes können auch evtl. auftretende Defekte am Bedienelement selbst angezeigt werden. Da auch dieses Verhalten der Wischvorrichtung keine zusätzliche Leitung zwischen Auswerteelektronik und Bedienelement erfordert, zeigt sich hier eine einfache und kostengünstige Lösung, die einen wesentlichen Beitrag zur Fahrsicherheit bedeutet.

Die weitere Ausgestaltung mit Hilfe eines zweiten Tastschalters zur Steuerung der Waschwasserpumpe ist eine einfache aber effiziente Möglichkeit der Kombination von Benetzungsfunktion und der Steuerungfunktion der Nachwischvorgänge, wie sie typischerweise notwendig sind.

Die Verbindung von Regensensor und Auswerteeinrichtung mit Hilfe einer digitalen Schnittstelle zu gestalten, weist zahlreiche Vorteile auf. Insbesondere können durch ein Kommunikationsprotokoll leicht Fehler, Störungen und Defekte erkannt werden. Bei solchen Zuständen stellt es sich dann als vorteilhaft heraus, wenn die Automatikfunktion in einen von der Auswertevorrichtung festgelegten Betrieb übergeht, so daß im Fall einsetzenden Niederschlags in jedem Falle ein manueller Wischerbetrieb möglich ist.

### Zeichnung

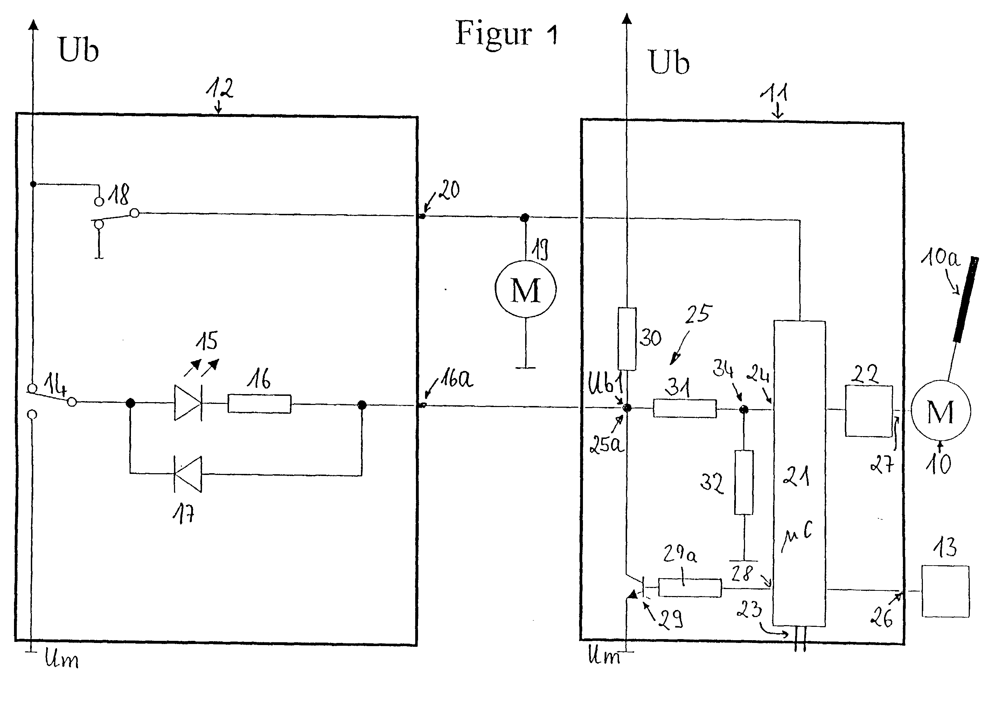

Ein Ausführungsbeispiel der Erfindung ist in der Zeichnung dargestellt und in der nachfolgenden Beschreibung näher erläutert. Die Figur zeigt ein Ausführungsbeispiel für die Wischvorrichtung mit Auswerteelektronik.

### Beschreibung des Ausführungsbeispiels

Die Figur zeigt einen Wischermotor 10, der von einer als Auswertevorrichtung 11 dienenden Zentralelektronik gesteuert wird. Weitere Ein- bzw. Ausgänge der Auwerteeinrichtung 11 führen zu einem als Lenkstockschalter ausgebildeten Bedienelement 12 und zu einem Regensensor 13. Im Bedienelement 12 befindet sich ein als Taster ausgebildetes erstes Schaltelement 14 zur Anwahl eines Wischbetriebes, der mit einer Leuchtdiode 15 und einem Widerstand 16 in Reihe geschaltet ist und zum Ausgang 16a des Bedienelementes 12 führt. Das erste Schaltelement 14 ist hier als Umschalter ausgebildet, dessen zwei Eingänge mit einer Klemmenspannung Ub bzw. mit Masse zu verbinden sind. Parallel zur Leuchtdiode 15 und dem Widerstand 16 ist eine Diode 17 in Gegenrichtung geschaltet. Der Regensensor 13 ist über eine digitale Verbindung an die Auswerteeinrichtung 11 angeschlossen.

In einer vorteilhaften Weiterbildung der Erfindung befindet sich im Bedienelement 12 ein weiteres als Taster ausgebildetes zweites Schaltelement 18, das bei Betätigung über einen zweiten Ausgang 20 die Klemmenspannung Ub des Bedienelementes 12 mit dem Motor einer Waschwasserpumpe 19 verbindet. Zusätzlich ist dann der zweite Ausgang 20 ebenfalls mit der Auswerteeinrichtung 11 verbunden.

In der Auswerteeinrichtung 11 befindet sich eine Elektronik 21, welche beispielsweise als µC ausgebildet ist oder einen solchen beinhalten kann, und verschiedene Schaltrelais 22 welche den Wischermotor 10 schalten. Dieser Wischermotor treibt den Wischer 10a an. Über eine weitere Schnittstelle 23 kann diese Elektronik beispielsweise auch mit anderen Fahrzeugkomponenten kommunizieren.

Die Auswerteeinrichtung 11 und das Bedienelementes 12 sind nur über eine Eindraht-Leitung miteinander verbunden. Die Elektronik 21 weist zwei Eingänge und zwei Ausgänge auf, wobei der erste Eingang 24 über einen ersten Abgriff 25a einer Spannungsteilerschaltung 25 mit dem Ausgang 16a des Bedienelements 12 und der zweite Eingang 26 mit dem Regensensor 13 verbunden ist. Der erste Ausgang 27 ist über Schaltrelais 22 mit dem Wischermotor 10 verbunden und der zweite Ausgang 28 über einen Vorwiderstand 29a mit einem Steueranschluß eines als Transistor ausgebildeten dritten Schaltelementes 29 verbunden, dessen Schaltstrecke eine Verbindung vom Ausgang 16a des Bedienelements 12, über den Abgriff 25a, zur Masse herstellt. Die Spannungsteilerschaltung 25 besitzt drei Widerstände 30,31,32 die die Klemmenspannung Ub mit der Masse verbinden. Der erste Abgriff 25a ist mit dem Ausgang des Bedienelementes 12, der zweite Abgriff 34 mit dem ersten Eingang 24 der Elektronik 21 verbunden.

In der Grundstellung d.h. in der Ruhelage schaltet das erste Schaltelement 14 eine Klemmenspannung Ub, über die Leuchtdiode 15 und den Widerstand 16 an den Ausgang 16a, an dem dann eine erste Steuerspannung Ub1 liegt. Da in der Ruhelage das dritte Schaltelement 29 gesperrt ist, liegt keine Massenverbindung vor. Es fließt nur ein sehr geringer Strom über die Leuchtdiode 15 , so daß ein Leuchten derselben verhindert wird. Am Eingang 24 der Elektronik 21 liegt somit eine vom Spannungsteiler 25 definierte Spannung an. Der Regensensor 13, Waschwasserpumpe 19 sind vorerst ausgeschalten. Die Relais 22 schließen dem Wischermotor 10 kurz und damit sind der Wischermotor 10 und die Wischer 10a vorerst nicht in Betrieb.

Wird nun das erste Schaltelement 14 zum Aktivieren der Anlage ein erstes Mal betätigt, fließt durch das Umschalten des ersten Schaltelementes 14 auf Masse ein Strom von der Versorgung Ub der Auswerteeinrichtug 11 über den Widerstand 30 und die Diode 17 in Richtung Masse. Dadurch liegt am zweiten Abgriff 34 des Spannungsteilers 25 und damit am ersten Eingang 24 der Elektronik 21 ein Massenpotential als zweite Steuerspannung Um an. Nach Erkennen dieses Spannungsabfalls legt die Elektronik 21 am zweiten Ausgang 28 eine Spannung an. Diese Spannung schaltet am dritten Schaltelement 29 eine Verbindung vom Ausgang 16a des Bedienelementes 12 zur Masse.
Da das erste Schaltelement 14 beim Loslassen wieder in die Grundstellung umschaltet, fließt nun, durch die Klemmenspannung Ub am Bedienelement 12, ein Strom durch das Schaltelement 14, die Leuchtdiode 15, den Widerstand 16, den Ausgang 16a und dann über den ersten Abgriff 25a des Spannungsteilers 25 und dem dritten Schaltelement 29 zur Masse, was ein Leuchten der Leuchtdiode 15 verursacht.
Dadurch bleibt auch der erste Eingang 24 der Elektronik 21 auf Masse geschaltet. Die Elektronik 21 veranlaßt daraufhin das Einschalten des Regensensors 13 über die digitale, serielle Verbindung für den automatischen Wischbetrieb.
Hierbei steuert die Elektronik 21 über die Relais 22 den Wischermotor 10 anhand der Signale des Regensensors 13 automatisch an. Die Verbindung zum Regensensor 13 arbeitet dabei bidirektional.

Am ersten Eingang 24 liegt nun jedoch ständig ein Massensignal an, was ein weiteres Erkennen einer Betätigung des Schaltelementes 14 zum Deaktivieren der Anlage verhindert. Der automatische Wischbetrieb könnte somit nur über ein Unterbrechen der Stromversorgung ausgeschaltet werden.

Als vorteilhafte Weiterbildung ist jedoch vorgesehen, daß die Elektronik 21 das dritte Schaltelement 29 über den zweiten Ausgang 28 getaktet anspricht, d.h. daß die Elektronik 21 das dritte Schaltelement 29 periodisch kurzzeitig sperrt. Dadurch wird die Massenverbindung des Ausgangs 16a kurzzeitig unterbrochen. Diese kurzen zyklischen Unterbrechungen sollen nur von so kurzer Dauer sein, daß das Leuchten der Leuchtdiode 15 aufgrund ihrer Trägheit nicht unterbrochen, aber ein anliegendes Massensignal aufgrund einer erneuten Betätigung des ersten Schaltelements 14 am ersten Eingang 24 von der Elektronik 21 während dieser Unterbrechung erkannt werden kann. Die Elektronik veranlaßt daraufhin ein Ausschalten des automatischen Wischbetriebes, das dritte Schaltelement 29 wird gesperrt und so die Leuchtdiode 15 mit dem Loslassen des Schaltelementes 13 ausgeschalten. Die Periodendauer der Taktung ist daher typischerweise im Subsekunden-Bereich, insbesondere im Millisekunden-Bereich.

Als weitere vorteilhafte Weiterbildung soll der zweite Ausgang 28 der Elektronik 21 so getaktet werden, daß verschiedene Blinksignale der Leuchtdiode 15 verursacht werden. Dies ist dann von Vorteil, wenn verschiedene Defekte, beispielsweise des Regensensors 13 oder des Wischermotors 10 von der Auswerteeinrichtung 11 erkannt und signalisiert werden sollen.

Wird zu irgendeinem Zeitpunkt das zweite Schaltelement 18 des Bedienelementes 12 betätigt, fließt ein Strom von der Klemmenspannung Ub des Bedienelementes 12 über den zweiten Ausgang 20 durch den Motor der Waschwasserpumpe 19 zur Masse, welcher die Waschwasserpumpe in Betrieb setzt. Dies hat typischerweise eine Benetzung der Scheibe zur Folge hat. Da der Ausgang 20 mit der Auswerteeinrichtung 11, insbesondere mit der Elektronik 21 verbunden ist, kann diese nun die notwendigen Maßnahmen ergreifen, typischerweise einige Wisch- und Nachwischvorgänge veranlassen.

Als weitere vorteilhafte Weiterbildung soll bei eingeschaltetem Regensensor 13 in einem Stör- oder Defektfall des Regensensors 13, der Wischermotor 10 in einen von der Auswertevorrichtung 11 vorbestimmten Zustand, insbesondere einen Dauerwischbetriebszustand, gesetzt werden so, daß die Scheibe immer gewischt wird, was einen wesentlichen Sicherheitsaspekt darstellt. Auch in diesem Fall wird die Anlage durch erneutes Betätigen des ersten Schaltelemente 12 stillgesetzt.

## Patentansprüche

1. Wischvorrichtung, insbesondere für eine Kraftfahrzeugscheibe, mit einem Regensensor (13) zur Erfassung der Benetzung der Scheibe, der Sensorsignale an eine Auswerteeinrichtung (11) abgibt, einem vorzugsweise als Lenkstockschalter ausgebildeten Bedienelement (12) mit einem ersten Schaltelement (14), dessen Ausgang (16a) zur Anwahl eines Wischbetriebs über nur eine Leitung mit der Auswerteeinrichtung (11) verbunden ist, und einem von der Auswerteeinrichtung (11) anzusteuernden Wischermotor (10) zum Antreiben eines Scheibenwischers (10a), wobei das erste Schaltelement (14) als Taster ausgebildet ist, **dadurch gekennzeichnet, daß** das Bedienelement (12) eine LED (15) aufweist, die über den Ausgang (16a) von der Auswerteeinrichtung (11) anzusteuern ist.

2. Wischvorrichtung nach Anspruch 1, **dadurch gekennzeichnet, daß** das erste Schaltelement (14) über die Auswerteeinrichtung (11) nur den Regensensor (13) ansteuert, und daß die Auswerteeinrichtung (11) den Wischermotor(10) in Abhängigkeit der Signale des Regensensors (13) steuert.

3. Wischvorrichtung nach Ansprüchen 1 oder 2, **dadurch gekennzeichnet, daß** das erste Schaltelement (14) in der Grundstellung den Ausgang (16a) des Bedienelementes über einen Widerstand (16) auf eine erste Steuerspannung (Ub1) schaltet.

4. Wischvorrichtung nach Anspruch 3 , **dadurch gekennzeichnet, daß** das erste Schaltelement (14) als Umschalter ausgebildet ist, der in seiner Taststellung den Ausgang (16a) auf eine zweite Steuerspannung (Um), insbesondere auf Masse schaltet.

5. Wischvorrichtung nach einem der vorhergehenden Ansprüche, **dadurch gekennzeichnet, daß** die LED (15) in Abhängigkeit vom Betriebsmodus des Regensensors anzusteuern ist.

6. Wischvorrichtung nach Anspruch 5, **dadurch gekennzeichnet, daß** die LED (15) mit dem ersten Schaltelement (14) und mit einem Widerstand (16) in Reihe geschaltet ist.

7. Wischvorrichtung nach Anspruch 6, **dadurch gekennzeichnet, daß** parallel zur LED (15) und dem Widerstand (16) eine weitere Diode (17) in Gegenrichtung geschaltet ist, über die der Ausgang (16a) bei Betätigung des Tasters (14) auf Masse geschaltet ist.

8. Wischvorrichtung nach einem der vorhergehenden Ansprüche, **dadurch gekennzeichnet, daß** die Auswerteeinrichtung (11) eine Elektronik (21), insbesondere einen µC aufweist, der zumindest zwei Eingänge und zwei Ausgänge aufweist, wobei der erste Eingang (24) über eine Spannungsteilerschaltung (25) mit dem Ausgang (16a) des Bedienelements (12) und der zweite Eingang (26) mit dem Regensensor (13) verbunden ist, wobei der erste Ausgang (27) mittelbar oder unmittelbar mit dem Wischermotor (10) und der zweite Ausgang (28) mit einem Steueranschluß eines dritten Schaltelements (29), insbesondere eines Transistors, verbunden ist, dessen Schaltstrecke in einer Verbindung zwischen dem Ausgang (16a) des Bedienelements (12) und der Masse liegt.

9. Wischvorrichtung nach Anspruch 8, **dadurch gekennzeichnet, daß** mit jeder Betätigung des ersten Schaltelementes (14) der Regensensor (13) und/oder das dritte Schaltelement (29) von der Elektronik (21) abwechselnd ein- und ausschaltbar ist.

10. Wischvorrichtung nach Anspruch 8, **dadurch gekennzeichnet, daß** das dritte Schaltelement (29) im Ruhezustand gesperrt und im Arbeitszustand leitend oder getaktet ist.

11. Wischvorrichtung nach Anspruch 8, **dadurch gekennzeichnet, daß** das dritte Schaltelement (29) im Normalbetrieb von der Elektronik (21) mit einem Takt angesteuert wird, bei dem die leitende Phase wesentlich länger als die sperrende Phase dauert und die Gesamtperiodendauer im Subsekundenbereich liegt.

12. Wischvorrichtung nach Anspruch 8, **dadurch gekennzeichnet, daß** der Spannungsteiler (25) zwischen der Klemmenspannung (Ub) und der Masse geschaltet ist und über einen ersten Abgriff (39) mit dem Ausgang (16a) des Bedienelementes (12) verbunden ist.

13. Wischvorrichtung nach Anspruch 8, **dadurch gekennzeichnet, daß** der Spannungsteiler (25) drei Widerstände (30, 31, 32) aufweist, wobei ein zweiter Abgriff (34) mit dem ersten Eingang (24) der Elektronik (21) verbunden ist.

14. Wischvorrichtung nach einem der vorhergehenden Ansprüche, **dadurch gekennzeichnet, daß** das Bedienelement (12) einen zweiten, insbesondere vom ersten unabhängigen Taster (18) besitzt der, über einen zweiten Ausgang (20) die Waschwasserpumpe (19) und den Wischermotor (10) mittelbar oder unmittelbar steuert.

15. Wischvorrichtung nach Anspruch 14, **dadurch gekennzeichnet, daß** der zweite Ausgang (20) des Bedienelementes (12) mit einem weiteren Eingang der Auswerteeinrichtung (21) verbunden ist.

16. Wischvorrichtung nach einem der vorhergehenden Ansprüche, **dadurch gekennzeichnet, daß** der Regensensor (13) eine digitale, vorzugsweise serielle Schnittstelle aufweist, und diese mit dem zweiten Eingang (26) der Elektronik (21) verbunden ist.

17. Wischvorrichtung nach einem der vorhergehenden Ansprüche, **dadurch gekennzeichnet, daß** bei Störung oder Ausfall des Regensensors (13) der Wischbetrieb einer von der Auswerteeinrichtung (11) vorbestimmten Wischweise, insbesondere einem Dauerbetrieb, folgt.

## Claims

1. Wiper device, in particular for a motor vehicle window, having a rain sensor (13) for sensing the wetting of the window, which outputs sensor signals to an evaluation device (11), an operator control element (12) which is preferably embodied as a steering column switch and has a first switching element (14) whose output (16a) for selecting a wiping mode is connected to the evaluation device (11) via just one line, and a wiper motor (10), which has to be actuated by the evaluation device (11) and has the purpose of driving a window wiper (10a), the first switching element (14) being embodied as a momentary contact switch, **characterized in that** the operator control element (12) has an LED (15) which has to be actuated by the evaluation device (11) via the output (16a).

2. Wiper device according to Claim 1, **characterized in that** the first switching element (14) actuates only the rain sensor (13) via the evaluation device (11), and **in that** the evaluation device (11) controls the wiper motor (10) as a function of the signals of the rain sensor (13).

3. Wiper device according to Claims 1 or 2, **characterized in that**, in the basic position, the first switching element (14) connects the output (16a) of the operator control element to a first control voltage (Ub1) via a resistor (16).

4. Wiper device according to Claim 3, **characterized in that** the first switching element (14) is embodied as a changeover switch which in its momentary contact position connects the output (16a) to a second control voltage (Um), in particular to earth.

5. Wiper device according to one of the preceding claims, **characterized in that** the LED (15) has to be actuated as a function of the operating mode of the rain sensor.

6. Wiper device according to Claim 5, **characterized in that** the LED (15) is connected in series with the first switching element (14) and with a resistor (16).

7. Wiper device according to Claim 6, **characterized in that** a further diode (17), via which the output (16a) is connected to earth when the momentary contact switch (14) is activated, is connected in the opposite direction in parallel with the LED (15) and the resistor (16).

8. Wiper device according to one of the preceding claims, **characterized in that** the evaluation device (11) has an electronic system (21), in particular a microcomputer, which has at least two inputs and two outputs, the first input (24) being connected via a voltage divider circuit (25) to the output (16a) of the operator control element (12), and the second input (26) being connected to the rain sensor (13), the first output (27) being connected indirectly or directly to the wiper motor (10), and the second output (28) being connected to a control connection of a third switching element (29), in particular a transistor, whose switching path is located in a connection between the output (16a) of the operator control element (12) and earth.

9. Wiper device according to Claim 8, **characterized in that** the rain sensor (13) and/or the third switching element (29) can be switched on and off alternately by the electronic system (21) whenever the first switching element (14) is activated.

10. Wiper device according to Claim 8, **characterized in that** the third switching element (29) is blocked in the state of rest and conductive or clocked in the working state.

11. Wiper device according to Claim 8, **characterized in that**, during normal operation, the third switching element (29) is actuated by the electronic system (21) with a clock in which the conductive phase lasts significantly longer than the blocking phase and the overall period length is in the subsecond range.

12. Wiper device according to Claim 8, **characterized in that** the voltage divider (25) is connected between the terminal voltage (Ub) and earth and is connected via a first tap (39) to the output (16a) of the operator control element (12).

13. Wiper device according to Claim 8, **characterized in that** the voltage divider (25) has three resistors (30, 31, 32), a second tap (34) being connected to the first input (24) of the electronic system (21).

14. Wiper device according to one of the preceding claims, **characterized in that** the operator control element (12) has a second momentary contact switch (18), in particular one which is independent of the first momentary contact switch and which controls the washing water pump (19) and the wiper motor (10) indirectly or directly via a second output (20).

15. Wiper device according to Claim 14, **characterized in that** the second output (20) of the operator control element (12) is connected to a further input of the evaluation device (21).

16. Wiper device according to one of the preceding claims, **characterized in that** the rain sensor (13) has a digital, preferably serial interface and this is connected to the second input (26) of the electronic system (21).

17. Wiper device according to one of the preceding claims, **characterized in that**, when the rain sensor (13) is faulty or fails, the wiping operating mode follows a wiping method, in particular a continuous operating mode, which is predetermined by the evaluation device (11).

## Revendications

1. Dispositif d'essuyage, notamment pour un pare-brise d'automobile, doté d'un capteur de pluie (13) permettant de détecter l'humidité de la vitre et émettant des signaux de capteur à un dispositif d'exploitation (11), d'un élément de commande (12) conçu de préférence comme un commutateur fixé à la colonne de direction avec un premier élément de commutation (14) dont la sortie (16a) permettant de sélectionner un mode d'essuyage est reliée au dispositif d'exploitation (11) par une seule ligne, et enfin d'un moteur d'essuie-glace (10) devant être excité par le dispositif d'exploitation (11) pour actionner un essuie-glace (10a), le premier élément de commutation (14) étant un palpeur,
**caractérisé en ce que**
l'élément de commande (12) comporte une DEL (15) qui est excitée par le dispositif d'exploitation (11) via la sortie (16a).

2. Dispositif d'essuyage selon la revendication 1,
**caractérisé en ce que**
le premier élément de commutation (14) excite uniquement le capteur de pluie (13) par le dispositif d'exploitation (11), et le dispositif d'exploitation (11) commande le moteur d'essuie-glace (10) en fonction des signaux du capteur de pluie (13).

3. Dispositif d'essuyage selon les revendications 1 ou 2,
**caractérisé en ce que**
le premier élément de commutation (14) en position de base commute la sortie (16a) de l'élément de commande sur une première tension de commande (Ub1) par une résistance (16).

4. Dispositif d'essuyage selon la revendication 3,
**caractérisé en ce que**
le premier élément de commutation (14) est un interrupteur va-et-vient qui commute dans sa position d'impulsion la sortie (16a) sur une deuxième tension de commande (Um), notamment à la masse.

5. Dispositif d'essuyage selon l'une quelconque des revendications précédentes,
**caractérisé en ce que**
la DEL (15) est excitée en fonction du mode de fonctionnement du capteur de pluie.

6. Dispositif d'essuyage selon la revendication 5,
**caractérisé en ce que**
la DEL (15) est montée en série avec le premier élément de commutation (14) et une résistance (16).

7. Dispositif d'essuyage selon la revendication 6,
**caractérisé en ce qu'**
une autre diode (17) est montée en parallèle à la DEL (15) et à la résistance (16) dans la direction inverse de celle dans laquelle est commutée la sortie (16a) à la masse lors de l'actionnement du palpeur (14).

8. Dispositif d'essuyage selon l'une quelconque des revendications précédentes,
**caractérisé en ce que**
le dispositif d'exploitation (11) comporte un système électronique (21), notamment un microcalculateur, qui comporte au moins deux entrées et deux sorties, la première sortie (24) étant reliée à la sortie (16a) de l'élément de commande (12) par un circuit de diviseur de tension (25) et la deuxième sortie (26) l'étant au capteur de pluie (13), la première sortie (27) étant reliée directement ou indirectement au moteur d'essuie-glace (10) et la deuxième sortie (28) à une gâchette d'un troisième élément de commutation (29), notamment d'un transistor, dont le chemin de commutation se trouve dans une liaison entre la sortie (16a) de l'élément de commande (12) et la masse.

9. Dispositif d'essuyage selon la revendication 8,
**caractérisé en ce que**
le capteur de pluie (13) et/ou le troisième élément de commutation (29) peut/peuvent être connecté(s) et déconnecté(s) alternativement du système électronique (21) à chaque fois que le premier élément de commutation (14) est actionné.

10. Dispositif d'essuyage selon la revendication 8,
**caractérisé en ce que**
le troisième élément de commutation (29) est bloqué à l'état de repos et est conducteur ou synchronisé à l'état de fonctionnement.

11. Dispositif d'essuyage selon la revendication 8,
**caractérisé en ce que**
le troisième élément de commutation (29) est excité en fonctionnement normal du système électronique (21) par un cycle dans lequel la phase conductrice dure bien plus longtemps que la phase de blocage et dans lequel la durée totale de la période se compte en secondes.

12. Dispositif d'essuyage selon la revendication 8,
**caractérisé en ce que**
le diviseur de tension (25) est commuté entre la tension en circuit ouvert (Ub) et la masse et est relié à la sortie (16a) de l'élément de commande (12) par une première prise (39).

13. Dispositif d'essuyage selon la revendication 8,
**caractérisé en ce que**
le diviseur de tension (25) comporte trois résistances (30, 31, 32), une seconde prise (34) étant reliée à la première sortie (24) du système électronique (21).

14. Dispositif d'essuyage selon l'une quelconque des revendications précédentes,
**caractérisé en ce que**
l'élément de commande (12) comporte un deuxième palpeur (18), indépendant notamment du premier, qui commande par une deuxième sortie (20) directement ou indirectement la pompe d'eau de lavage (19) et le moteur d'essuie-glace (10).

15. Dispositif d'essuyage selon la revendication 14,
**caractérisé en ce que**
la deuxième sortie (20) de l'élément de commande (12) est reliée à une autre entrée du dispositif d'exploitation (11).

16. Dispositif d'essuyage selon l'une quelconque des revendications précédentes,
**caractérisé en ce que**
le capteur de pluie (13) comporte une interface numérique, de préférence série, et celle-ci est reliée à la deuxième entrée (26) du système électronique (21).

17. Dispositif d'essuyage selon l'une quelconque des revendications précédentes,
**caractérisé en ce qu'**
en cas de dysfonctionnement ou de panne du capteur de pluie (13), le fonctionnement d'essuyage suit un mode d'essuyage prédéfini par le dispositif d'exploitation (11), notamment un fonctionnement continu.
